# EUROPÄISCHE PATENTSCHRIFT

(11) **EP 0 733 411 B1**
(45) Veröffentlichungstag und Bekanntmachung des Hinweises auf die Patenterteilung: **05.01.2000**
(21) Anmeldenummer: 96104415.3
(22) Anmeldetag: 20.03.1996
(51) Int. Cl.: B09B 1/00, B09C 1/00, C05F 17/02, G01N 33/00

(54) **Verfahrbare Multifunktions-Entsorgungssimulations-Anlage**
Mobile multifunctional device for the simulation of disposal processes
Dispositif mobile multifonctionnel pour la simulation de procédés d'élimination

(30) Priorität: 24.03.1995 DE 19510917
(43) Veröffentlichungstag der Anmeldung: 25.09.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hund, Kerstin, Dr., 57392 Schmallenberg, Gleidorf (DE); Klein, Werner, Prof., 57392 Schmallenberg (DE); Kördel, Werner, Dr., 57392 Schmallenberg, Fleckenberg (DE); Görtz, Theo, 57392 Schmallenberg (DE); Schwarzer, Norbert, 57368 Lennestadt (DE)

(56) Entgegenhaltungen:
- FR-A- 785 575
- MUELL UND ABFALL, Bd. 23, Nr. 1, Januar 1991, BERLIN DE, Seiten 20-25, XP000176962 T. POLLER: "Untersuchungen zur Gasbildung aus Hausmüll unter Berücksichtigung des Gehalts von abfallbürtigen LCKW/FCKW"
- MUELL UND ABFALL, Bd. 16, Nr. 8, 1984, BERLIN DE, Seiten 225-231, XP000602526 A. MENNERICH: "Gemeinsame Ablagerung von Hausmüll und Gewerbeabfällen"

## Beschreibung

Die Erfindung bezieht sich auf eine verfahrbare Multifunktions-Entsorgungssimulations-Anlage zur Simulation des Langzeiterhaltens von organische Bestandteile enthaltenden Entsorgungsgütern.

Die zunehmende Umweltbelastung durch ständig steigende Müllanteile an den im Handel befindlichen Massenprodukten unserer Industriegesellschaft, aber auch die bedenklich zunehmende Bodenbelastung durch den oft bedenkenlosen Einsatz von Herbiciden und Pesticiden in der Landwirtschaft, wie letztlich auch die erhöhte Kontaminationsgefahr sogar ganzer Landstriche durch Unachtsamkeiten oder Havarien, beispielsweise in der chemischen Groß-Industrie und schließlich der Reaktortechnik, haben eine Bewußtseinsänderung der Bevölkerung und der verantwortlichen Organe in Politik und Industrie in Richtung auf verantwortungsvolleres Handeln beim Umgang mit der Natur und der sonstigen Umwelt erbracht.

Wachsenden Mülldeponien bei kaum noch ausreichenden Deponiekapazitäten stehen sich verknappende Rohstoffressourcen gegenüber, wobei dieser divergierenden Entwicklung nur Einhalt geboten werden kann, wenn die recycelbaren Komponenten der Entsorgungsgüter zurückgewonnen in einen sinnvollen Kreislauf rückgeführt werden können. Insbesondere Müll, wie Hausmüll, Gartenmüll, kommunale Klärschlämme, aber auch Abfälle der landwirtschaftliche Produkte verarbeitenden Industrie, eignen sich vorteilhaft, um auf biologischem Wege wiederaufbereitet zu werden, sei es durch Kompostierung oder andere biologische Abbauverfahren, bei denen vorhandene Schadstoffkomponenten möglichst entfernt und ein an Spurenelementen reicher Humusstoff gewonnen werden kann.

Um hier zu sinnvollen und die berechtigten Bedenken des Umweltschutzes berücksichtigenden Ergebnissen zu gelangen, sind genaue Erkenntnisse über Verrottungsprozesse, das Kompostierungsverhalten unterschiedlicher Bioprodukte, die Chemie der aeroben und anaeroben Kurz-/oder Langzeitzersetzung und die Gefahren der während des Abbaus toxischer Molekülverbindungen gegebenen Neubildungen anderer toxischer Komponenten erforderlich. Nur so kann ein sinnvolles, keine neuen und weiteren Gefahren in sich bergendes Vorgehen bei der Aufbereitung solcher Entsorgungsgüter ermöglicht werden.

Ein besonderes und nicht weniger wichtiges Problem stellt das Langzeitverhalten bereits entstandener und noch entstehender Mülldeponien dar, insbesondere die damit im Zusammenhang stehende Gefährdung des Grundwassers. Sollten zukünftig die anfallenden Abfälle nur noch und erst dann deponiert werden dürfen, wenn sie vorher durch thermische Verfahren inertisiert und mineralisiert worden sind, dann kommt der mechanisch-biologischen Vorbehandlung von entsprechend abbaubaren, organischen Abfällen noch weiter steigende Bedeutung zu.

Da mit der Lösung der vorstehend skizzierten dringend anstehenden Probleme, beispielsweise dem Langzeitverhalten bisheriger Deponieablagerungen nicht über Jahrzehnte experimentiert werden kann, um frühestens nach einer weiteren Generation verwertbare Ergebnisse vorliegen zu haben, ist es erforderlich, mit möglichst realistischen Modellen Untersuchungen zu fahren, die großvolumige Verhaltensweisen, auch wenn sie in der Natur über relativ lange Zeiträume ablaufen bezüglich der zu untersuchenden Parameter im Labormaßstab und über relativ kurze Zeitabläufe zu simulieren in der Lage sind.

In diesem Zusammenhang sind beispielsweise Lysimeter bekannt, in denen Probenvolumina von nur einigen cm³ bis hin zu wenigen m³ auf Sanierungsmöglichkeiten, etwa bei chemisch belasteten Böden untersucht werden oder das Rekultivierungsverhalten unfruchtbar gewordener, verseuchter Erde bei Vorgabe unterschiedlicher thermischer-Feuchter-Druck- und dergl. Bedingungen erforscht wird. Nachgestellt wird mit derartigen Lysimetern, insbesondere mit großvolumigen Lysimetern, auch das Deponieverhalten von Abfällen, wobei hier die Schwierigkeit besteht, daß Wissenerweiterungen, die auf sehr verschiedenen Versuchsvarianten beruhen, oft aus Kostengründen sich nur in kleinvolumigen Lysimetern durchführen lassen, insbesondere dann, wenn Versuchsergebnisse nur statistisch ausgewertet werden können. Um so geringer die Masse und das Volumen des Probematerials jedoch ist, ums so weiter entfernen sich die gegebenen Versuchsbedingungen von den tatsächlichen in der Natur bzw. Umwelt vorliegenden realistischen Verhältnissen.

Für die Untersuchung des Verhaltens beim Abbau von Schadstoffen in kontaminierten Böden sind Lysimeter wenig geeignet. Hier wird bisher erfolgreich experimentiert mit sog. Bioreaktoren, die unter Suspensionsbedingungen eingesetzt werden können. In den bekannten Bioreaktoren lassen sich die Temperatur, der Sauerstoffgehalt und der Nährstoffgehalt der Proben je nach Untersuchungszyklus geeignet steuern.

Aus Müll und Abfall, Bd. 23 Nr. 1, 1991, Seiten 20-25 von T. Poller ist ein Versuchsreaktor bekannt, der aus einem Behälter mit einer inneren Grundplatte und wenigstens einer Auslaßöffnung besteht sowie einer unmittelbar über dieser den Auflageboden für das Füllgut bildenden waagrechten Grundplatte, die als Siebboden ausgebildet ist und einem die lichte Weite des Behälters gasdicht übergreifenden Deckel wobei die Vorrichtung einem die Gesamtheit des Behälters aufnehmenden verfahrbaren Untersatz aufweist.

Aus der FR-A-785 575 ist ebenfalls ein Bioreaktor zur Fermentation bekannt, der ebenfalls einen Siebboden aufweist.

Wieder andere Reaktoren sind Hauptbestandteil eines weiteren Simulationsverfahrens für die Erforschung des Kompostierungsverhaltens von hierfür geeigneten Abfall-Rohstoffen.

Nachteilig ist somit bei den gegebenen Simulationsverfahren der vorstehend genannten Art, daß entsprechend der jeweiligen Zielsetzung und Anwendung eine Vielzahl unterschiedlicher Reaktoranlagen bzw. Versuchsaufbauten erforderlich ist, d.h. daß ein entsprechend kostenaufwendiger, technischer Mehraufwand betrieben werden muß, um die Komplexizität der Lösungsansätze für die gegebene Umweltproblematik aufgreifen und in die richtigen Zusammenhänge stellen zu können.

Nur beispielsweise und kurz sei hier etwa darauf verwiesen, daß es bei Simulationsversuchen mit Lysimetern nicht oder nur mit erheblichen Schwierigkeiten parziell möglich ist, die beim biologischen Abbau anfallenden Gase zu sammeln und damit analysieren zu können. Andererseits lassen sich mit den bisher bekannten Deponiesimulatoren keine Informationen über das Setzverhalten des Deponiegutes innerhalb der Deponie in Abhängigkeit von der Zeit erhalten.

Hier setzt die vorliegende Erfindung ein, der die Aufgabe zugrundeliegt, eine Entsorgungssimulationsanlage der eingangs genannen Art vorzugeben, mit der sich eine Vielzahl von Funktionen, wie sie etwa die bisherigen Lysimeter, Bioreaktoren und dergl. im einzelnen erfüllen, wahlweise, zeitgleich oder hintereinander ablaufen zu lassen, so daß die bisher kostenintensiven Einzelanlagen für unterschiedliche Aufgabenstellungen in einer einzigen Anlage zusammengefaßt werden können, bei gleichzeitiger Verbesserung der erzielbaren Versuchsergebnisse.

Die Lösung dieser Aufgabe ist zusammengefaßt im Wortlaut des Patentanspruches 1 wiedergegeben. Vorteilhafte Ausgestaltungen und Weiterbildungen dieser Aufgabenlösung ergeben sich aus den Unteransprüchen.

Mit der erfindungsgemäß ausgebildeten Multifunktions-Entsorgungssimulations-Anlage ist es nunmehr möglich, eine Vielzahl unterschiedlicher Funktionen, so beispielsweise die Simulation von Sanierungsverfahren, von Kultivierungsverfahren, das Deponieverhalten von Müll, auch dessen Langzeitverhalten, die Vorgänge in Kompostierungsnalgen, wie auch andere Bodenuntersuchungen aller Art in ein und derselben Anlage durchführen zu können. Aussagen bezüglich der Qualität von Böden, Komposten und Abfällen können so mit größerer Zuverlässigkeit getroffen werden. Das Langzeitverhalten festgelegter Schadstoffe in Böden und Komposten läßt sich gewissermaßen im Zeitraffer bezüglich der in der Natur langsam ablaufenden Abbauvorgänge untersuchen, was schließlich zur Entwicklung neuer Qualitätskriterien für mechanisch-biologisch unbehandelten Restmüll im Hinblick auf dessen Deponieverhalten oder Kompostierungsmöglichkeit führt. Durch eine vorteilhafte Kombination von chemischen und ökotoxikologischen Analysemethoden lassen sich weitreichende Aussagen über das Umweltverhalten eingelagerter Schadstoffe treffen und so für die Zukunft bisher kaum vermeidbare Risiken eher erkennen und damit ausschließen.

Durch die eingebauten Wägevorrichtungen lassen sich in vorteilhafter Weise Rückschlüsse auf das Wasserverhalten des Füllgutes ohne Störungen im Füllgut selbst schließen. Störungen, wie sie für derartige Untersuchungen durch bisher eingebaute Saugkerzen gegeben waren, entfallen zur Gänze. Informationen über das Setzverhalten des Füllgutes bei Deponiesimulationen lassen sich erheblich verbessern, da mittels des erfindungsgemäßen Entsorgungssimulationsbehälters sowohl eine automatische Steuerung für ein vorgebbares Temperaturprogramm, der im Simulationsbehälter selbst auftretenden Temperatur, als auch einer von außen zuführbaren oder abführbaren Temperatur, gegeben ist. Durch kontinuierliche automatische Gasanalytik lassen sich Aussagen sowohl über die mikrobielle Aktivität als auch die Gas-Schadstoffemission in Abhängigkeit von Zeit und Temperatur treffen. Dadurch daS die Anlage vollständig aus Edelstahl besteht, lassen sich hiermit auch Spezialuntersuchungen radioaktiv kontaminierter Proben durchführen. Bisher unterschiedliche apparative Aufbauten, wie sie durch das bekannte Lysimeter einerseits und die Bioreaktoren andererseits gegeben sind, werden nunmehr durch bloßen Austausch zweier unterschiedlicher Deckelkonstruktionen erfüllt. Die Verfahrbarkeit der Entsorgungssimulations-Anlage bringe den weiteren Vorteil einer Mobilität zwischen unterschiedlichen Laborräumen ohne Ab- und Wiederaufbau der Gesamtanlage.

Weitere Vorteile und Einzelheiten sollen nachfolgend anhand der beiliegenden Zeichnungen näher erläutert werden, die beispielsweise Ausführungsformen der Anlage schematisiert wiedergeben.

Hierbei bedeuten:
**Figur 1**
   eine erfindungsgemäße Entsorgungssimulations-Anlage in ihrer Ausgestaltung zur Deponiesimulation, vereinfacht im Schnitt und
**Figur 2**
   eine Anlage gemäß Anspruch 1, umgestaltet für den Einsatzbereich der Kompostierung und Kultivierung von Böden.

Wie in den Zeichnungen schematisiert dargestellt, ist ein Edelstahlbehälter 1 auf einem Rollenwagen 6 montiert, der auf Rollen 7 verfahrbar ist. Der rechteckige Rollenwagen 6 ist dadurch von möglichst flacher Konstruktion, daS sein mittlerer Abschnitt 8 tief gelegt ist, d.h. die Auflagefläche liegt unterhalb des Rollendurchmessers, hier in Höhe der Rollenachsen, wofür die Kantenbereiche des Wagenchassis in der aus der Zeichnung ersichtlichen Weise aufgewinkelt sind, um unter sich frei die Rollen 7 aufnehmen zu können. Mittels Arretierschrauben 27 ist der fahrbare Untersatz ortsfest fixierbar und falls gewünscht, die Gesamtlast der Entsorgungssimulations-Anlage von den Rollen 7 auf eben diese Arretierschrauben übertragbar. Auf den mittleren tief gelegten Abschnitt 8 des als Rollenwagen 6 ausgebildeten fahrbaren Untersatzes ist der Edelstahlbehälter 1 aufgesetzt und hier gleichfalls mittels Arretierbolzen 28 gesichert. Die als Behälterlager 29 ausgebildeten unteren tragenden Teile des Edelstahlbehälters 1 stützen sich hierbei auf Wägezellen 12 ab, die es ermöglichen, das jeweils momentane Gewicht des Behälters feststellen bzw. überprüfen zu können. Der auf den Rollenwagen 6 aufgesetzte Edelstahlbehälter ist von zylindrischer Form, wobei sein zylindrischer Mantel doppelwandig ausgebildet ist, bestehend aus der äußeren Wandung 2 und der inneren Wandung 3. Der zwischen den Doppelwandungen 2, 3 gebildete Ringraum wird mit einem Fließmedium von vorzugsweise hoher Wärmekapazität gefüllt, etwa mit Sole, so daß von hier aus eine Beheizung der Behälterfüllung, wahlweise auch eine Kühlung derselben, möglich wird. Um die externe Temperaturbeaufschlagung des Füllgutes über die Behälterwandung zeitabhängig und programmierbar steuern zu können, ist es möglich, in den Ringraum zwischen äußerer Wandung 2 und innerer Wandung 3 Heiz-/Kühlvorrichtungen 4 einzubringen und damit die jeweilige Temperatur des Kühl-/Wärmemediums direkt steuern zu können. Eine weitere vorteilhafte Lösung besteht jedoch auch darin, das Fließmedium im Ringraum nicht nach erfolgter Auffüllung statisch ruhen zu lassen, sondern es kontinuierlich oder diskontinuierlich über eine externe Wärme-/Kühlvorrichtung umlaufen zu lassen und über diese die jeweils gewünschte momentane Temperatur zu definieren. Es ist auf diese Weise möglich, automatische Temperaturprogramme in einen für die Simulation sinnvollen Temperaturbereich zwischen -10°C und 80°C voll automatisiert zu fahren. Durch die zylindrische Doppelwandung 2, 3 des Edelstahlbehälters 1 sind Probennahme-Öffnungen 14 sowie Öffnungen 15 für Meßsonden hindurchgeführt, die um die Umfangsfläche des Behälters in unterschiedlichen Höhen vorgesehen sind und die vor und nach ihrer Benutzung verschlossen werden können.

Im Bodenbereich durchgreift den Behälterquerschnitt, der im Ausführungsbeispiel 1,5 m beträgt, ein eingeschweißter oder anderweitig befestigter Siebboden 9, auf dem sich das in den Behälter eingegebene Füllmaterial abstützt. Dicht unterhalb des Siebbodens 9 befindet sich eine, die Behälterunterseite dicht abschließende, innere Grundplatte 10, die gegenüber der horizentalen leicht geneigt ist und an ihrem untersten, radial außenliegenden Ende eine Auslaßöffnung 13 für Sickerwasser aufweist, die durch die Doppelwandung 2, 3 hindurchgeführt wird. Die Auslaßöffnung 13 ist mit einer nicht dargestellten Auffangvorrichtung für das Sickerwasser zu Zwecken von Probennahmen und Probenanalysen verbunden.

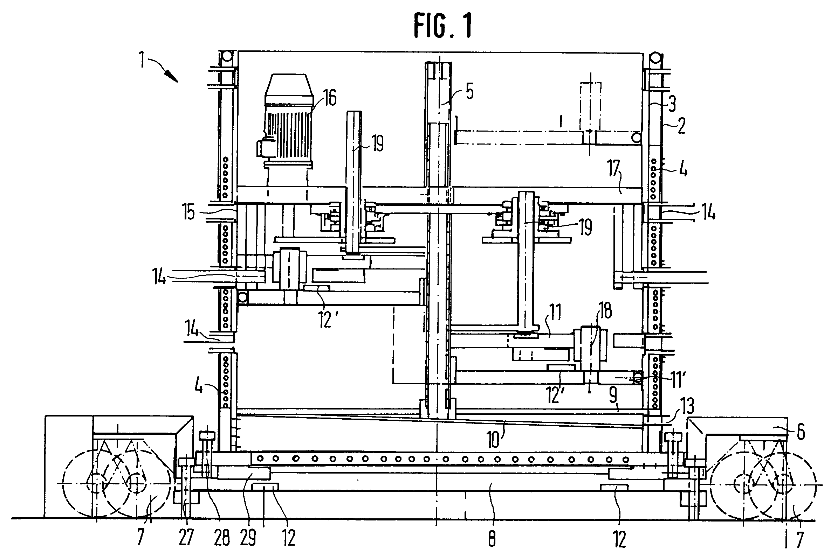

Die Entsorgungssimulations-Anlage gemäß Figur 1 stellt in dieser Ausführungsform einen Deponiesimulator dar, wofür sie mit einem Druckdeckel 11, 11' nach oben hin abgeschlossen ist, der die lichte Weite des Behälters gasdicht übergreifend vollständig verschließt und entlang der Innenwandung 3 vertikal verschiebbar ist. Hierfür ist seine radial äußere Umfangsfläche, die in dichtendem Eingriff mit der Innenwandung des Behälters 1 steht, mit einer geeigneten, gasdichten Führung 30 versehen. Der Behälter ist im Ausführungsbeispiel ca. 1,40 m hoch. Für den gemäß Figur 1 gegebenen Verwendungszweck ist auf bzw. in der Grundplatte des Behälters mittig in der vertikalen Zylinderachse liegend ein perforiertes Steigrohr 5 angeordnet, dessen Lochungen über seine gesamte Länge gleichmäßig verteilt sind. Das perforierte Steigrohr 5 dient der Ableitung und Entnahme der im Behälter vom Füllgut abgegebenen gasförmigen Komponenten, wobei eine kontinuierlich durchgeführte automatische Gasanalytik wertvolle Aussagen sowohl über die mikrobielle Aktivität als über Schadstoffemissionen liefert. Geeignete Gasmeßvorrichtungen können sowohl unmittelbar am Steigrohr 5 als auch über eine Schlauchverbindung extern, vorzugsweise auf dem Rollenwagen 6 und damit mit diesem eine integrale Einheit bildend, montiert sein.

Der Druckdeckel 11, 11' besteht aus einer oberen Stahlplatte 11 und einer unteren Stahlplatte 11', die über puffernde Abstandshalter 18 zusammengehalten werden und zwischen denen Wägevorrichtungen in Form von Wägezellen 12' in Stellung gebracht sind. Somit lassen sich Unterschiede in der Druckbeaufschlagung auf die obere Stahlplatte 11 des Druckdeckels einerseits und vom Füllgut her auf die untere Druckplatte 11' messen und je nach gegebenen Versuchsaufbau variabel einstellen.

In der Darstellung gemäß Figur 1 ist der Druckdeckel 11, 11' in zwei unterschiedlichen Stellungen auf der rechten und linken Seite des Behälters 1 wiedergegeben, wodurch die schrittweise Füllung des Edelstahlbehälters 1 besser veranschaulicht werden soll. Für das Ausführungsbeispiel ergibt sich hier eine stufenlos einstellbare Füllhöhe von ca. 110 cm und damit eine maximale Füllgutmenge von etwa 1,8 m³. Dieses Maximalvolumen von 1,8 m³ wurde hier vorgesehen, um auch inhomogene Materialien, so wie sie landwirtschaftlich genutzter Boden darstellt, untersuchen zu können.

Über die Wägezellen 12 lassen sich genaue Aussagen über Gewichtsveränderungen, beispielsweise bei Feuchtigkeitserhöhung aber auch Austrocknungsvorgängen, treffen und in Abhängigkeit mit anderen Parametern auswerten. Dadurch daß der Druckdeckel 11, 11' gasdicht den Behälter nach außen verschließt, sind Untersuchungen des Füllgutes sowohl unter aeroben als auch unter anaeroben Bedingungen möglich. Die am Steigrohr 5 anschließbaren Gasanalysevorrichtungen können variieren, so daS sowohl C0₂, CH₄, N₂0, N₂, NH₃ als auch H₂S oder andere Gaskomponenten, die bei der simulierten Versuchsanordnung anfallen können oder vermutet werden, meßbar sind. Bei der Untersuchung kontaminierter Entsorgungsgüter oder Böden lassen sich so Abhängigkeiten der Schadstoffemission von Lagerzeit, Lagerdruck und -temperatur kontrollieren.

Für den Einsatzbereich Deponieren gemäß Figur 1, bei dem der doppelwandige Druckdeckel 11, 11' zur Anwendung kommt, ist im Behälterinneren in der dargestellten Weise noch eine Motorplatte 17 befestigt, durch die Spindeln 19 geführt sind, deren Antrieb über einen auf der Motorplatte 17 montierten Motor 16 erfolgt. Somit läßt sich beliebiger Preßdruck zwischen Motorplatte 17 und Druckdeckel 11 vorgeben, wobei entsprechend den auf einer Deponie tatsächlich gegebenen Bedingungen der Behälter 1 stufenweise mit Deponiegut gefüllt wird. Hierfür werden vorgegebene Mengen an Deponiematerial jeweils nacheinander in den Behälter eingefüllt und nach Zugabe jeder einzelnen Deponiemenge der Druckdeckel über den Antrieb 16, 19 betätigt und damit definiert Druck auf jede Deponiecharge aufgeübt. Beliebige andere, speziellen Deponiegegebenheiten nachgestellte Füllabläufe des Edelstahlbehälters 1 sind denkbar und ohne Umbau der Entsorgungssimulations-Anlage möglich. Die in Großdeponien ablaufenden mikrobiellen Abbauvorgänge, d.h. mehr oder weniger intensive mikrobielle Aktivitäten, sind somit in Abhängigkeit von der Verdichtung, der Temperierung, der Feuchtebeschaffenheit und dergl. meßbar und nach unterschiedlichen Kriterien auswertbar. Simulierbar sind verschiedene Redoxveränderungen des Langzeitverhaltens des abgelagerten Entsorgungsgutes, pH-Wertveränderungen, Defekte in der Deponieabdichtung und dergl. mehr, wofür die Feststoffanteile, die Sickerwasserkomponenten, die Gasanalytik eine Vielzahl von aufschlußreichen Meßwertreihen ergeben.

Aufgrund der großen Anzahl von Variationsmöglichkeiten sind weitere vielfältige Einsatzmöglichkeiten der Simulierung auch von Spezialdeponien, Sanierungsverfahren und dergl. möglich.

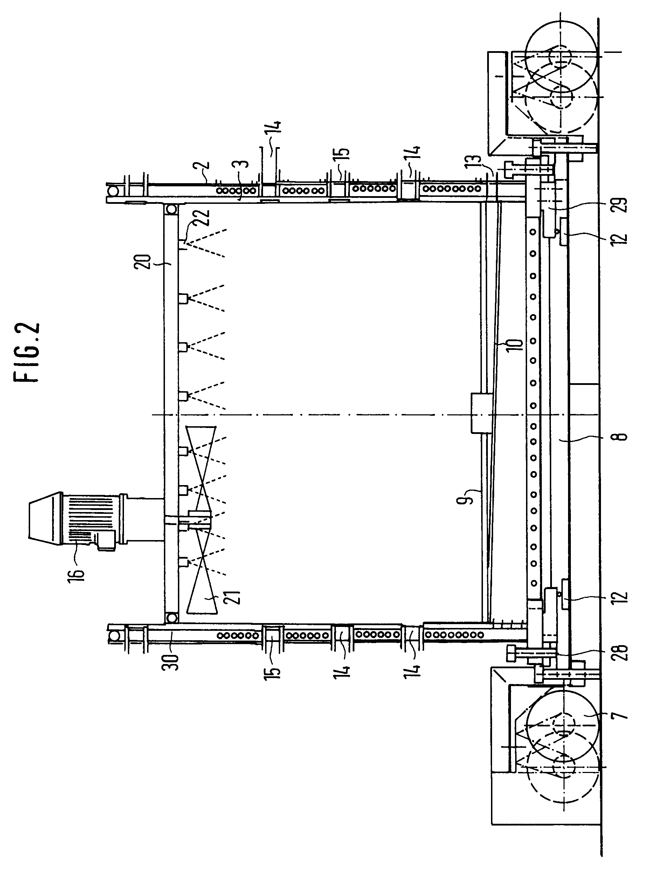

Die Figur 2 zeigt eine weitere bevorzugte Anwendungsmöglichkeit von mehreren Anwendungsmöglichkeiten der erfindungsgemäßen Entsorgungssimulations-Anlage. Hier erfolgt die Simulation von Umweltbedingungen unter Normaldruck. Der für die Simulation von Deponieanlagen wichtige Druckdeckel 11, 11', mit zwischen der Doppelstahlplattenanordnung vorgesehenen Wägezellen 12', kann hier entfallen und ersetzt werden durch einen vereinfachten Deckel 20, beispielsweise auch die Motorplatte 17 von Figur 1, der entsprechend dem Druckdeckel von Figur 1 vertikal innerhalb des Behälters 1 höhenverstellbar ist und hierfür mit einer gasdichten Führung 30 gegen die innere Umfangsfläche der inneren Wandung 3 der Doppelwandung 2, 3 anliegt.

Im Gegensatz zur Deponiesimulation, bei der der Druckdeckel auch während der Inkubationsphase des Untersuchungsgutes in direktem Kontakt mit diesem steht, bleibt bei der Simulation von Umweltbedingungen ein Luftraum über dem Untersuchungsmaterial frei, d.h. der Deckel 20 liegt nicht unmittelbar auf dem Füllmaterial im Behälter 1 auf. Für die hier und zu diesem Ausführungsbeipiel interessierenden Untersuchungsbedingungen befinden sich auf der der Innenseite des Behälters zugewandten Oberfläche des Deckel 20 für das Verhalten, etwa der Kompostierung und Kultivierung von Böden, eine Mehrzahl von Beregnungsvorrichtungen 22 in Form von gleichmäßig über die Deckelfläche verteilten Düsen sowie wenigstens ein Ventilator 21 zur Homogenisierung der über dem Füllmaterial sich ausbildenden Atmosphäre.

Der Behälter 1 selbst muß gegenüber der Behälterform nach Figur 1 keinerlei Änderungen erfahren. Auch hier sind symmetrisch über die Seitenwand verteilt Probenentnahme- und Sondeneinführungsöffnungen vorgesehen, die in gleicher Weise genutzt werden können, wie für die Simulation von Deponien im Ausführungsbeispiel nach Figur 1. Der Motor 16 kann im diesem Ausführungsbeipiel dem Betreiben oder Ventilatoren 21 dienen, aber auch über eine nicht dargestelle Spindelhebe-/Senkanordnung oder dergl. Verschiebungsantrieb die Vertikalbewegung des Deckels steuern. Eine Mehrzahl von durch den Deckel hindurchgeführten Anschlüssen kann mit Gaszu- bzw. -abführanschlüssen zu unterschiedlichsten Meßgeräten führen. Für bestimmte Versuchsanordnungen nicht benötigte Durchbrüche werden bei anaeroben Untersuchungen geschlossen oder dienen bei der Simulation aerober Bedingung der Zuführung von Luftsauerstoff. Auch hier ist eine externe und vollautomatische Temperaturregulierung über das Wärmeaustauschmedium im Ringraum zwischen äußerer Wandung 2 und innerer Wandung 3 möglich, so daß beispielsweise eine Simulation der Jahreszeitenzyklen, der Tag/Nachttemperaturunterschiede und dergl. mehr möglich wird.

Während eines simulierten Kompostierungsprozesses können beispielsweise Schadstoffe in die Humusfraktion injiziert werden. Die externe Beheizung des Füllgutes ergibt sich als Notwendigkeit bei der Simulierung von Kompostierungen beispielsweise dadurch, daß bei Kompostierungen unter Naturbedingungen im Material Temperaturen zwischen 55° bis 65° C erreicht werden, die bei der Simulierung im kleineren Volumenmaßstab aufgrund der ungünstigen Volumen/Oberflächenverhältnisse sich im Behälter nicht ausbilden können. Die automatische Nachheizung in Abhängigkeit von der Füllguttemperatur schafft hier Ausgleich und damit auch für kleine Untersuchungsmengen realistische Bedingungen.

Die Ausbildung des doppelwandigen Behälters 1 als Stahlbehälter läßt auch Versuchsreihen mit radioaktiv-kontaminierten Untersuchungsmaterialien zu oder den Einsatz von radioaktiv-markierten Kontaminanten, wodurch sich letztlich eine vollständige Aufklärung des Verhaltens bestimmter Substanzen während der Kompostierung und in einer nachgeschalteten Umweltsimulation ergeben. In der Ausführungsform nach Figur 2 bietet die Anlage die Möglichkeit, Bodenkompostgemische bzw. Böden einzulagern und verschiedene Umwälzszenarien, die im Bereich (Re-)Kultivierung denkbar sind, mit Ausnahme von Pflanzenbewuchs nahezu naturgetreu zu simulieren. Zur Untersuchung des Langzeitverhaltens festgelegter Schadstoffe im Zeitraffer wird die mikrobielle Abbauleistung simuliert und zwar sowohl durch geeignete Temperaturerhöhung als auch die Schaffung bestimmter Angriffsstellen, so wie sie in der Natur, wenn auch in zeitlich anderer Folge, vorkommen können.

## Patentansprüche

1. Verfahrbare Multifunktions-Entsorgungssimulations-Anlage zur Simulation des Langzeitverhaltens von organische Bestandteile enthaltenden Entsorgungsgütern, nämlich deponierbarem Hausmüll und ähnlichen Abfällen, aber auch von kontaminierten Böden, deren Rekultivierung, von Kompostierungen und dergleichen Bodenuntersuchungen
bestehend aus
- einem Behälter mit einer unteren inneren Grundplatte mit wenigstens einer Auslaßöffnung an ihrer untersten Stelle,
- einer unmittelbar über dieser, den Auflageboden für das Füllgut bildende, waagerechte Grundplatte, die als Siebboden ausgebildet ist, einem die lichte Weite des Behälters gasdicht übergreifenden Deckel, und
- einem die Gesamtheit des Behälters aufnehmenden, verfahrbaren Untersatz,
dadurch **gekennzeichnet**,
- daß der Behälter (1) doppelwandig und beheizbar ist,
- seine Grundplatte (10) eine leichte Neigung aufweist,
- der Deckel (11, 11'; 20) entlang der Innenwand (3) höhenverstellbar ist
und
- zwischen Untersatz und Behälter Wägevorrichtungen (12) angeordnet sind.

2. Anlage nach Anspruch 1, dadurch gekennzeichnet, daß der Behälter (1) aus Edelstahl besteht, eine zylindrische Form aufweist und daß durch die Doppelwandung (2, 3) Durchbrüche bzw. Öffnungen (14, 15) in unterschiedlichen Höhen für die Entnahme von Proben und/oder die Einbringung von Meßsonden vorgesehen sind.

3. Anlage nach Anspruch 1 und 2, dadurch gekennzeichnet, daß in den Ringraum zwischen der Doppelwandung (2, 3) Heiz- und/oder Kühlvorrichtungen (4) eingebaut sind und daß der Ringraum mit einem Fließmedium hoher Wärmekapazität aufgefüllt ist.

4. Anlage nach Anspruch 1 und 2, dadurch gekennzeichnet, daß das Fließmedium durch den Ringraum zirkulierend von einer externen Wärme-/Kühlvorrichtung temperiert ist.

5. Anlage nach Anspruch 3 und 4, dadurch gekennzeichnet, daß das Fließmedium eine Solelösung ist.

6. Anlage nach Anspruch 1, dadurch gekennzeichnet, daß der höhenverstellbare Deckel als Druckdeckel (11, 11') ausgebildet ist, der im wesentlichen aus zwei parallelen Stahlplatten bestehend, wobei die Deckelanordnung in ihrer Gesamtheit mittels Spindelantrieb (16, 19) höhenverstellbar ist.

7. Anlage nach Anspruch 6,
dadurch gekennzeichnet, daß die zwei parallelen Stahlplatten des Druckdeckels (11,11') im Abstand zueinander mittels Wägevorrichtungen (12') gehalten sind.

8. Anlage nach Anspruch 1,
dadurch gekennzeichnet, daß der Deckel (20) einteilig ausgebildet ist und an seiner, der Behälterinnenseite zugewendeten Oberfläche Beregnungsvorrichtungen (22), wenigstens einen Ventilator (21), Anschlüsse für Gasentnahmen sowie für die Begasung mit Verteilereinrichtungen und dergl. ausweist.

9. Anlage nach Anspruch 1 sowie Anspruch 7,
dadurch gekennzeichnet, daß die Wägevorrichtungen (12,12') aus Wägezellen bestehen.

10. Anlage nach Anspruch 1 und wenigstens einem der Ansprüche 2 bis 9,
dadurch gekennzeichnet, daß mittig auf der Grundplatte bzw. dem Meßboden (9) ein perforiertes Steigrohr (5) befestigt ist, das in der Zylinderachse des Behälters stehend bis in die Nähe der oberen stirnseitigen Öffnung geführt ist und den Behälterdeckel (11,11' bzw. 20) gasdicht durchgreift.

11. Anlage nach Anspruch 1 bis 10,
dadurch gekennzeichnet, daß dem Behälter (1) automatische Temperatursteuerungsvorrichtungen und Gasanalyseeinrichtungen zugeordnet sind.

12. Anlage nach Anspruch 1,
dadurch gekennzeichnet, daß der verfahrbare Untersatz (6) ein wenigstens über den Querschnitt des Behälters höhenabgesenkter, quadratischer Rollenwagen ist.

13. Anlage nach Anspruch 1 und wenigstens einem der Ansprüche 2 bis 10,
dadurch gekennzeichnet, daß für die Vertikalverschiebung des Druckdeckels (11,11') mehr als eine Spindel (19) vorgesehen ist, die durch eine im Behälter (1) arretierbare Motorplatte (17) geführt sind, auf der ein die Spindeln antreibender Motor (16) befestigt ist.

## Claims

1. A mobile multifunction waste disposal simulation apparatus for simulating the long-term conditions of waste disposal materials containing organic components, namely disposable household waste and similar waste, also however contaminated ground, recultivation thereof, composting and like soil investigations,
consisting of
- a container with a lower, inner baseplate with at least one outlet opening in its lowermost point,
- a horizontal baseplate directly above the former, forming the supporting surface for the filling material, which is formed as a sieve base, a gas-tight cover spanning the clear width of the container, and
- a mobile base receiving the whole of the container,
characterized in that
- the container (1) is double-walled and can be heated,
- its baseplate (10) has a slight inclination,
- the cover (11, 11'; 20') is adjustable in height along the inner wall (3)
and
- weighing devices (12) are arranged between the base and the container.

2. Apparatus according to claim 1, characterized in that the container (1) consists of stainless steel, has a cylindrical shape and in that through holes or openings (14, 15) are provided at various heights through the double wall (2, 3) for the removal of samples and/or the introduction of measuring probes.

3. Apparatus according to claim 1 or 2, characterized in that heating and/or cooling devices (4) are fitted in the annular space between the double wall (2, 3) and in that the annular space is filled with a fluent medium of high heat capacity.

4. Apparatus according to claim 1 or 2, characterized in that the fluent medium is temperature controlled in circulation through the annular space by an external heating/cooling device.

5. Apparatus according to claim 3 or 4, characterized in that the fluent medium is a brine solution.

6. Apparatus according to claim 1, characterized in that the cover adjustable in height is in the form of a pressure cover (11, 11'), consisting essentially of two parallel steel plates, wherein the cover arrangement is adjustable in height as a whole by means of a spindle drive (16, 19).

7. Apparatus according to claim 6, characterized in that the two parallel steel plates of the pressure cover (11, 11') are retained spaced from one another by means of weighing devices (12').

8. Apparatus according to claim 1, characterized in that the cover (20) is formed in one piece and comprises on its surface facing the inside of the container sprinkler devices (22), at least one fan (21), connections for gas removal and distributor devices and the like for introducing gas.

9. Apparatus according to claim 1 and claim 7, characterized in that the weighing devices (12, 12') consist of load cells.

10. Apparatus according to claim 1 and at least one of claims 2 to 9, characterized in that a perforated riser tube (5) is fixed centrally on the baseplate or the measuring base (9) and extends upright on the cylinder axis of the container into the vicinity of the upper end opening and passes gas-tight through the container cover (11, 11').

11. Apparatus according to any claim 1 to 10, characterized in that automatic temperature control devices and gas analysis devices are associated with the container (1).

12. Apparatus according to claim 1, characterized in that the mobile base (6) is a square trolley which is recessed at least over the cross-section of the container.

13. Apparatus according to claim 1 and at least one of claims 2 to 10, characterized in that more than one spindle (19) is provided for the vertical displacement of the pressure cover (11, 11'), the spindles passing through a motor plate (17) which can be arrested in the container (1), on which plate a motor (16) driving the spindles is fixed.

## Revendications

1. Dispositif mobile multifonctionnel pour la simulation de procédés d'élimination, pour simuler le comportement à long terme de produits à éliminer contenant des composés organiques, précisément des ordures ménagères devant être mises en décharge et des déchets analogues, mais également des sols contaminés, leur remise en culture, de compostages et de recherches analogues sur les sols,
constitué d'
- un récipient ayant une plaque de base intérieure inférieure, avec au moins une ouverture d'évacuation au point le plus bas,
- une plaque de base horizontale, placée directement au-dessus de celle-ci, constituant le fond de pose pour le produit de remplissage, plaque de base réalisée sous la forme d'un fond de tamisage, un couvercle recouvrant de façon étanche aux gaz l'ouverture libre du récipient, et
- une embase déplaçable, supportant la totalité du récipient,
caractérisé en ce que
- le récipient (1) est à double paroi et est chauffable,
- sa plaque de base (10) présente une légère inclinaison,
- le couvercle (11, 11'; 20) est réglable en hauteur le long de la paroi intérieure (3), et
- entre l'embase et le récipient sont disposés des dispositifs de pesage (12).

2. Dispositif selon la revendication 1,
caractérisé en ce que
le récipient (1) est réalisé en acier inoxydable, présente une forme cylindrique, et en ce qu'à travers la paroi double (2, 3) sont prévues des traversées ou des ouvertures (15, 16) à des niveaux différents, pour prélever des échantillons et/ou pour introduire des sondes de mesure.

3. Dispositif selon les revendications 1 et 2,
caractérisé en ce que
des dispositifs de chauffage et/ou de refroidissement (4) sont montés dans l'espace annulaire existant entre la paroi double (2, 3), et en ce que l'espace annulaire est rempli d'un milieu fluide de haute capacité calorifique.

4. Dispositif selon les revendications 1 et 2,
caractérisé en ce que
le milieu fluide à circulation dans l'espace annulaire est régulé en température par un dispositif de chauffage/refroidissement externe.

5. Dispositif selon les revendications 3 et 4,
caractérisé en ce que
le milieu fluide est une solution de saumure.

6. Dispositif selon la revendication 1,
caractérisé en ce que
le couvercle réglable en hauteur est réalisé sous la forme de couvercle à pression (11, 11') constitué essentiellement de deux plaques en acier parallèles, le dispositif de couvercle étant en totalité réglable en hauteur au moyen d'un entraînement à broche filetée (16, 19).

7. Dispositif selon la revendication 6,
caractérisé en ce que
les deux plaques d'acier parallèles du couvercle à pression (11, 11') sont maintenues à distance l'une de l'autre par des dispositifs de pesée (12').

8. Dispositif selon la revendication 1,
caractérisé en ce que
le couvercle (20) est réalisé en une seule partie et présente sur sa surface, tournée vers le côté intérieur du récipient, des dispositifs d'arrosage (22), au moins un ventilateur (21), des raccordements pour des prélèvements de gaz ainsi que pour l'insufflation de gaz, avec des dispositifs distributeurs et analogues.

9. Dispositif selon la revendication 1 ainsi que la revendication 7,
caractérisé en ce que
les dispositifs de pesée (12, 12') sont constitués de cellules de pesée.

10. Dispositif selon la revendication 1 et au moins l'une des revendications 2 à 9,
caractérisé en ce que
centralement sur la plaque de base, respectivement le fond de mesure (9), est fixé un tube montant (5) perforé qui est guidé dans l'axe du cylindre du récipient en montant jusqu'à proximité de l'ouverture frontale supérieure et traverse de façon étanche aux gaz le couvercle du récipient (11, 11', respectivement 20).

11. Dispositif selon les revendications 1 à 10,
caractérisé en ce qu'
au récipient (1) sont associés des dispositifs de régulation de température et des dispositifs d'analyse de gaz, automatiques.

12. Dispositif selon la revendication 1,
caractérisé en ce que
l'embase (6) déplaçable est un chariot à galets, carré, pouvant être abaissé, couvrant au moins la section transversale du récipient.

13. Dispositif selon la revendication 1 et au moins l'une des revendications 2 à 10,
caractérisé en ce que
pour le déplacement vertical du couvercle à pression (11, 11') est prévue plus qu'une broche(s) filetée(s) qui sont guidées au moyen d'une plaque moteur (17) pouvant être bloquée dans le récipient et sur laquelle est fixé un moteur (16) entraînant les broches.
